(19) Europäisches Patentamt
European Patent Office
Office européen des brevets

(11) **EP 2 173 016 A1**

(12) **EUROPÄISCHE PATENTANMELDUNG**

(43) Veröffentlichungstag:
**07.04.2010 Patentblatt 2010/14**

(51) Int Cl.:
**H02H 3/02** *(2006.01)*

(21) Anmeldenummer: 08017411.3

(22) Anmeldetag: **02.10.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **DBK David + Baader GmbH
76870 Kandel/Pfalz (DE)**

(72) Erfinder: **Bauer, Hans-Peter
76889 Klingenmünster (DE)**

(74) Vertreter: **Polte, Willi et al
Winter, Brandl, Fürniss, Hübner,
Röss, Kaiser, Polte - Partnerschaft
Patent- und Rechtsanwaltskanzlei
Bavariaring 10
80336 München (DE)**

(54) **Schaltung für einen elektrischen Verbraucher mit einer Lastschaltvorrichtung**

(57) Die vorliegende Erfindung bezieht sich auf ein System zum Abschalten mindestens eines elektrischen Verbrauchers, beispielsweise eines Heizelements, mit hoher Leistung im Fehlerfall, bei dem im Fehlerfall der Strom, der durch eine Stromsicherung fließt, soweit zum Steigen angeregt wird, bis die Sicherung auslöst. Eine Lastschaltvorrichtung zum trennbaren elektrischen Verbinden des elektrischen Verbrauchers mit einer Versorgungsspannung umfasst einen Lastschalter oder eine Parallelschaltung von mehreren Lastschaltern, wobei parallel zu der Lastschaltvorrichtung und dem zur Lastschaltvorrichtung in Serie geschaltetem Verbraucher ein Kurzschlusspfad mit einem Kurzschlussschalter angeordnet ist und in Serie zu der Lastschaltvorrichtung ein Unterbrecherelement geschaltet ist und wobei die Versorgungsspannung über eine Induktivität, z. B. über induktivitätsbehaftete Zuleitungen, zugeführt wird. Alternativ sind mindestens zwei Lastschalter parallel geschaltet, die jeweils mit einem Unterbrecherelement in Serie geschaltet sind, oder die Ansteuerschaltung umfasst eine Treiberschaltung, die so betreibbar ist, dass ein Effektivwert eines durch das Heizelement fließenden Stromes kleiner ist als ein Auslösestrom des Unterbrecherelements.

FIG. 1

EP 2 173 016 A1

**Beschreibung**

Die vorliegende Erfindung bezieht sich auf ein System zum Abschalten eines elektrischen Verbrauchers, z. B. eines Heizelements, mit hoher Leistung im Fehlerfall. Bei bestehenden Systemen mit hoher Leistung, z.B. einer Ansaugluftvorwärmung in einer Brennkraftmaschine, sind Lastschaltelemente wie Relais oder Leistungstransistoren, beispielsweise MOSFETs, im Einsatz. Bei diesen Schaltelementen besteht bauartbedingt die Gefahr des Versagens.

In dem Falle eines Relais tritt dieser Schadensfall bei der Abschaltung durch das sogenannte "Verkleben" des Relais auf.

Demgegenüber kann das sogenannte Durchlegieren eines Transistors auch ohne äußere Schaltvorgänge erfolgen, z. B. bei Einwirkung hoher Temperatur oder elektromagnetischer Störer. In einem solchen Fehlerfall fließt der Laststrom dauerhaft und kann nicht mehr abgeschaltet werden.

Eine bekannte Lösung, einen solchen Fehler zu detektieren, besteht in dem Vorsehen einer Temperaturerkennungseinrichtung. Nach dem Erreichen einer oberen Grenztemperatur spricht beispielsweise eine Schmelzsicherung an, welche die Heizvorrichtung von der Leistungsversorgung trennt. Eine solche Schaltung ist beispielsweise aus der DE 103 61 641 A1 bekannt.

Diese deutsche Patentanmeldung offenbart eine Schutzschaltung, die eine Überhitzung an FET-Schaltern verhindern soll. Bei einem Ausfall des FET-Schalters wird verhindert, dass die Last beschädigt wird, indem eine Nebenschaltung mit einer Sicherung und einem kontrolliertem Sicherheitsschalter vorgesehen wird. Die Steuerung der Schutzschaltung erfolgt nicht mit Bezug auf eine Überlastung in der Versorgungsleitung, sondern in Übereinstimmung mit der Integrität der FET-Schalter.

Letztere wird anhand der Temperatur beurteilt. Daher umfasst die bekannte Schutzschaltung einen Temperaturdetektor, der mit dem Hauptschalter assoziiert ist, wobei der Mikrocontroller sequentiell den Zustand des Temperatursensors prüft, um bei einer Anomalie der Temperatur das entsprechende Festkörperrelais zu öffnen, und, wenn das Problem fortbesteht, den gesteuerten Sicherheitsschalter zu schließen, um die Stromversorgung über die Nebenleitung zu erden. Auf diese Weise wird eine Unterbrechungseinrichtung, also eine Sicherung, ausgelöst, um die Trennung des Festkörperrelais und des entsprechenden Satzes von assoziierten Lasten von der Stromversorgung zu veranlassen.

Insbesondere bei Ansaugluftvorwärmsytemen in einem Kraftfahrzeug wird aber eine Temperatursicherung benötigt, die bei hohen Temperaturen, z.B. ca. 250°C, abschalten kann, die maximale Betriebstemperatur von typischerweise 150°C aber problemlos trägt. Eine derartige Temperatursicherung, die außerdem hohe Ströme schalten kann, ist jedoch nicht in einfacher und kostengünstiger Weise realisierbar. Darüber hinaus bleibt der Strom, der durch den Lastschalter fließt, im Fehlerfall normalerweise konstant und es kann bei bekannten Lösungen kein Signal für eine erforderliche Abschaltung der Leistungsversorgung daraus gewonnen werden.

Die Aufgabe, die der vorliegenden Erfindung zugrunde liegt, besteht daher darin, eine verbesserte Schaltung für einen Verbraucher, beispielsweise ein Heizelement, mit einer Lastschaltvorrichtung zum trennbaren elektrischen Verbinden des Verbrauchers mit einer Versorgungsspannung anzugeben, die besonders einfach, kostengünstig und sicher realisierbar ist.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei basiert die vorliegende Erfindung auf der Idee, dass im Fehlerfall der Strom, der durch eine Stromsicherung fließt, soweit zum Steigen angeregt wird, bis die Sicherung auslöst.

Eine erste Möglichkeit besteht darin, dass die Lastschaltvorrichtung mindestens einen Hauptlastschalter aufweist. Parallel zu der Lastschaltvorrichtung und des zur Lastschaltvorrichtung in Serie geschalten Verbrauchers ist erfindungsgemäß ein Kurzschlusspfad mit einem Kurzschlussschalter angeordnet und in Serie zu der Lastschaltvorrichtung wird ein Unterbrecherelement zum Unterbrechen der Verbindung zwischen der Lastschaltvorrichtung und der Versorgungsspannung angeordnet. Erfindungsgemäß ist mindestens eine Induktivität zum Verlängern der Anstiegszeit des Stromes beim Aktivieren des Kurzschlusspfades vorgesehen. Beispielsweise wird die Versorgungsspannung über induktivitätsbehaftete Zuleitungen zugeführt.

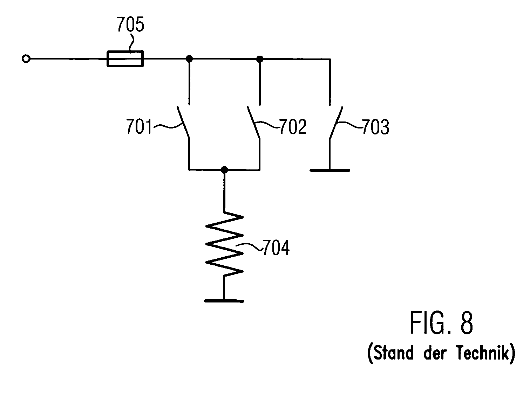

Demgegenüber sind der Verbraucher, beispielsweise ein Heizelement, und der Kurzschlussschalter bei bekannten Lösungen unmittelbar geerdet und die Zuleitung zur Sicherung ist so kurz wie möglich. Ein Beispiel für eine solche bekannte Schaltung ist in Figur 8 gezeigt. Dabei sind zwei Leistungsschalter 701 und 702 parallel zueinander geschaltet, damit die Verlustleistung gering ist. Zumeist handelt es sich bei den Schaltern 701, 702 um MOSFET-Bauteile. Ein Heizelement 704 ist zwischen Masse und die durch die beiden Schalter 701, 702 gebildete Lastschaltvorrichtung geschaltet. Ein Kurzschlussschalter 703, der parallel zu der Lastschaltvorrichtung und des zur Lastschaltvorrichtung in Serie geschalteten Verbrauchers einen Kurzschlusspfad zur unmittelbaren Erdung einer Sicherung 705 bereitstellt, wird in dem Falle, dass einer der beiden Lastschalter 701, 702 nicht mehr öffnet, geschlossen. Dadurch soll die Sicherung 705 ausgelöst werden.

Nachteilig an dieser bekannten Schaltung ist jedoch, dass der Kurzschlussschalter 703 einen Kurzschluss mit sehr hohem Strom schaltet und daher meist bereits durch den hohen Strom zerstört wird, bevor die Sicherung den Stromkreis auftrennen kann. Der Grund hierfür ist, dass die Sicherung 705 durch eine Erwärmung auslösen muss. Diese Erwärmung benötigt eine gewisse Zeit, typischerweise ca. eine Sekunde. Während dieser Aufheizzeit wird bei der in Figur 8 gezeigten Schaltung meist der Schalter 703 zerstört, wenn dieser nicht durch ein extrem aufwendiges temperatur- und stromstabiles Bauteil gebildet ist.

Die vorliegende Erfindung ermöglicht es, durch das Vorsehen zusätzlicher Induktivitäten, z. B. der induktivitätsbehafteten Zuleitungen, diese Problematik zu umgehen. Bei der erfindungsgemäßen Lösung wird, falls ein Kurzschluss als Bauteilfehler eines der beiden Lastschalter detektiert wird, der Kurzschlussschalter nur für eine sehr kurze Zeit angesteuert. Aufgrund der parasitären Induktivität in den Zuleitungen steigt der Strom linear an.

Erfindungsgemäß wird, bevor ein für den Kurzschlussschalter kritischer Wert erreicht ist, der Kurzschlussschalter geöffnet. Aufgrund des Induktionsgesetzes fließt aber der Strom über die Sicherung und den defekten Lastschalter weiter. Nach einer definierten Zeit wird der Kurzschlussschalter erneut für kurze Zeit geschlossen. Der erhöhte Strom führt zu einer zunehmenden Erwärmung der Sicherung und nach Erreichen einer Auslöseschwelle dieser Sicherung zu deren Zerstörung und damit zur zuverlässigen Auftrennung der Verbindung zwischen dem Verbraucher und der Versorgungsspannung. Üblicherweise ist als Sicherung ein Schmelzsicherungselement vorgesehen.

Eine alternative Lösung, den Strom durch den Verbraucher im Fehlerfall zu beeinflussen, besteht darin, eine Lastschaltvorrichtung mit einer Parallelschaltung von mindestens zwei Lastschaltern zu verwenden, die jeweils mit einem Unterbrecherelement in Serie geschaltet sind. Es wird also für jeden Lastschalter eine separate Sicherung vorgesehen. Der Gesamtstrom, der durch den Verbraucher fließt, teilt sich bei gleichartigen Schaltern und Sicherungen in etwa zu gleichen Teilen in einen geringeren Strom auf.

Tritt nun bei einem der Lastschalter ein Kurzschluss auf und wird der oder werden die noch funktionsfähigen Lastschalter geöffnet, fließt der gesamte Strom weiter über den fehlerhaften Schalter und dessen zugehörige Sicherung. Erfindungsgemäß wird die Sicherung so ausgelegt, dass sie bei diesem mehrfachen Strom ausgelöst wird, und die Verbindung zwischen Verbraucher und Versorgungsspannung wird unterbrochen, da die noch funktionsfähigen Lastschalter geöffnet sind und in dem Zweig mit dem defekten Lastschalter die Sicherung die Verbindung unterbrochen hat. Diese Lösung stellt eine besonders einfach und kostengünstig realisierbare Variante dar.

Gemäß einer weiteren vorteilhaften Ausführungsform der vorliegenden Erfindung kann aber auch nur ein einziger Lastschalter vorgesehen sein, der mit einem Unterbrecherelement zum Unterbrechen der Verbindung mit der Versorgungsspannung in Serie geschaltet ist, und es kann erfindungsgemäß eine Treiberschaltung vorgesehen sein, die den Schalter getaktet betreibt, so dass der Effektivwert des fließenden Stromes kleiner ist als der Auslösestrom der Sicherung. Weiterhin wird die Einschaltzeit des Schalters wesentlich kleiner gewählt als die Reaktionszeit der Sicherung und schließlich wird die Sicherung so ausgelegt, dass ihr Auslösestrom geringer ist als der Spitzenstrom, der durch die anliegende Spannung und den ohmschen Widerstand durch den Verbraucherzweig definiert ist.

Dies bedingt, dass der Lastschalter erfindungsgemäß mit einem Tastverhältnis Ton/Toff von maximal 50%, üblicherweise 30%, betrieben wird. Tritt ein Fehler auf, so dass der Lastschalter nicht mehr geöffnet werden kann, steigt der Effektivstrom auf den Maximalwert an. Dieser Wert ist über längere Zeit höher als der Auslösestrom der Sicherung, die Sicherung schmilzt durch und unterbricht den Stromfluss durch den Verbraucher. Wenngleich diese Lösung eine Steuerung zum getakteten Ansteuern des Lastschalters benötigt, ist doch die leitungstechnische Realisierung vergleichsweise einfach und die Stromsicherung außerordentlich zuverlässig.

Im Folgenden wird die Erfindung beispielhaft mit Bezug auf die beigefügten Zeichnungen erläutert. Die unterschiedlichen Merkmale können dabei unabhängig voneinander kombiniert oder weggelassen werden, wie dies oben bei den einzelnen vorteilhaften Ausgestaltungen bereits dargelegt wurde. Die erfindungsgemäße Schaltung kann für alle elektrischen Verbraucher eingesetzt werden, bei denen im Fehlerfall kein Stromanstieg zu verzeichnen ist. Beispielsweise können dies Heizelemente, Motoren, Ventile oder Leuchtmittel sein. In den nachfolgenden Figuren sind beispielhaft Heizelemente als Verbraucher dargestellt.

Es zeigen:

**Fig. 1** einen vereinfachten Stromlaufplan eines Heizelements mit Ansteuerschaltung gemäß einer ersten vorteilhaften Ausführungsform;

**Fig. 2** einen vereinfachten Stromlaufplan eines Heizelements mit Ansteuerschaltung gemäß einer zweiten vorteilhaften Ausführungsform;

**Fig. 3** den zeitlichen Verlauf des Stroms durch den Kurzschlussschalter und des Gesamtstroms für die Schaltungen der Fig. 1 und 2;

**Fig. 4** einen Stromlaufplan eines Heizelements mit einer weiteren Ansteuerschaltung;

**Fig. 5** den zeitlichen Verlauf der Ströme in der Schaltung nach Fig. 4;

**Fig. 6** ein Heizelement mit einer weiteren Ansteuerschaltung;

**Fig. 7** den zeitlichen Verlauf der Ströme in der Schaltungsanordnung der Fig. 6;

**Fig. 8**    ein Heizelement mit einer bekannten Ansteuerschaltung.

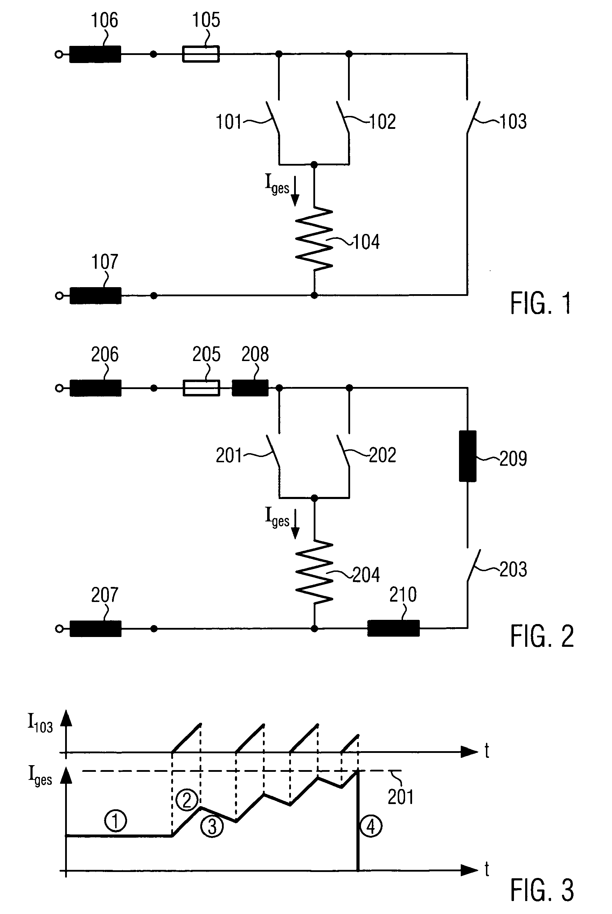

Bei der in Figur 1 gezeigten ersten Ausführungsform wird eine ähnliche Anordnung wie die in Figur 8 skizzierte bekannte Schaltung über induktivitätsbehaftete Zuleitungen 106, 107 mit der Versorgungsspannung verbunden. Wird der Bauteilfehler "Kurzschluss" bei einem der Lastschalter 101, 102 detektiert, so wird der Kurzschlussschalter 103 durch eine in dieser Figur nicht dargestellte Steuerung für eine sehr kurze Zeit angesteuert. Der Bauteilfehler, d.h. das Durchlegieren eines der beiden Lastschalter, kann dadurch detektiert werden, dass die Spannung an dem Heizelement 104 gemessen wird. Kann man diese Spannung messen, obwohl die Last ausgeschaltet sein sollte, wird die erfindungsgemäße Ansteuerung des Kurzschlussschalters 103 vorgenommen. Aufgrund der Induktivität in den Zuleitungen 106, 107 steigt der Strom linear an.

Erfindungsgemäß wird nun der Kurzschlussschalter 103 bereits wieder geöffnet, bevor ein für diesen Kurzschlussschalter kritischer Wert erreicht wird. Aufgrund des Induktionsgesetzes fließt der Strom über die Sicherung 105 und den defekten Schalter 101 oder 102 weiter. Nach einer definierten Zeit wird der Kurzschlussschalter 103 erneut für kurze Zeit geschlossen. Der sich sägezahnförmig langsam erhöhende Strom führt zur Erwärmung der Sicherung 105 und schließlich zu deren Zerstörung. Dadurch wird die Verbindung zwischen der Zuleitung 106 und dem Heizelement 104 effektiv aufgetrennt.

Alternativ oder zusätzlich zu den parasitären Induktivitäten 106, 107 der Zuleitungen aus Figur 1 können aber auch an verschiedenen anderen Stellen der erfindungsgemäßen Schaltung eine oder mehrere Induktivitäten 206 bis 210 eingefügt werden, wie dies in Figur 2 gezeigt ist.

In Figur 3 sind mit zusätzlichem Bezug auf Figur 1 die Verläufe des Stroms durch den Kurzschlussschalter 103 und des Gesamtstroms durch das Heizelement 104 als Funktion der Zeit aufgetragen. Wie aus dem Verlauf des Stromes $I_{103}$ erkennbar, verläuft dieser annähernd sägezahnförmig, nachdem im Zeitbereich ① festgestellt wurde, dass aufgrund eines Kurzschlusses in den Schaltern 101 oder 102 ständig ein Strom $I_{Gesamt}$ fließt, der aber unterhalb der durch die Linie 201 symbolisierten Auslöseschwelle der Sicherung liegt. Im Bereich ② steigt der Strom $I_{Gesamt}$ linear an, weil der Kurzschlussschalter 103 geschlossen wird. Wie im Bereich ③ schematisch dargestellt, sinkt der Strom $I_{Gesamt}$ zwar, wenn der Kurzschlussschalter wieder geöffnet wird, fließt aber dennoch über den defekten Lastschalter mit einem Wert weiter, der über dem anfänglichen Strom des Bereichs ① liegt. Durch mehrfache Schaltvorgänge des Kurzschlussschalters 103 wird schließlich zum Zeitpunkt ④ die Auslöseschwelle 201 erreicht und die Sicherung 105 trennt die Verbindung auf. Analog gilt der Zeitverlauf der Figur 3 auch für die Schaltung, die in Figur 2 gezeigt ist.

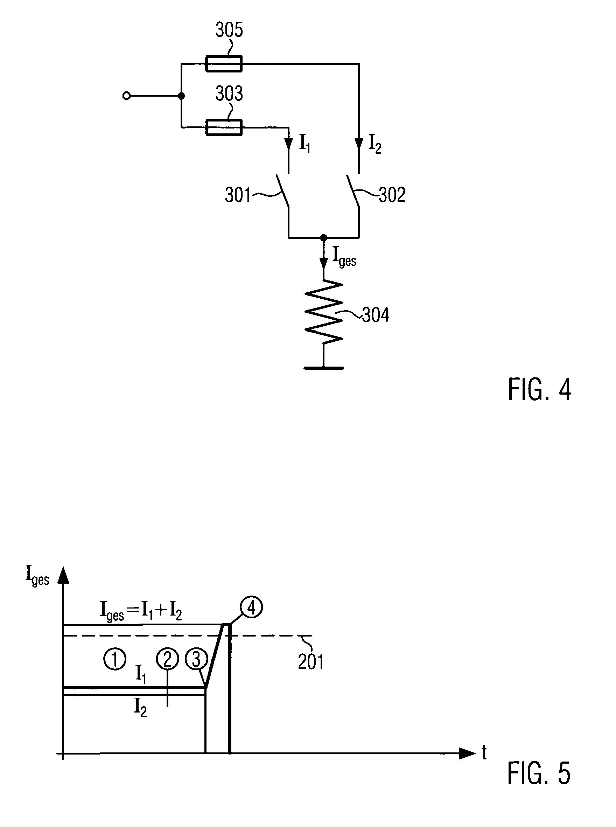

Eine weitere vorteilhafte Ausgestaltung der vorliegenden Erfindung ist in Figur 4 gezeigt. Bei der hier dargestellten Variante wird das Heizelement 304 über eine Parallelschaltung von zwei Lastschaltern 301, 302 angesteuert. Bei der in Figur 4 gezeigten Variante ist aber kein Kurzschlusszweig und Kurzschlussschalter vorgesehen, sondern jedes der beiden Schaltelemente 301, 302 besitzt eine eigene Sicherung 303, 305. Der Gesamtstrom $I_{Gesamt}$ teilt sich bei der hier gezeigten Anordnung je zur Hälfte auf in die Ströme $I_1$ und $I_2$.

Tritt in einem der Schalter 301 oder 302 ein Kurzschluss auf und wird der noch funktionsfähige jeweilige andere Schalter geöffnet, führt dies dazu, dass der gesamte Strom $I_{Gesamt}$ über den fehlerhaften Schalter und die ihm zugeordnete Sicherung fließt. Aufgrund des damit doppelt so hohen Stroms über die Sicherung wird deren Auslöseschwelle erreicht und die Sicherung löst aus.

Dieser Vorgang ist schematisch in Figur 5 dargestellt. In dem mit ① gekennzeichneten Bereich ist kein Fehler aufgetreten und der Gesamtstrom berechnet sich zu $I_{Gesamt} = I_1 + I_2$. In dem Bereich ② tritt ein Kurzschluss auf, d. h. der betroffene Schalter kann nicht mehr öffnen. Am Zeitpunkt ③ wird dieser Fehler detektiert, beispielsweise dadurch, dass die Spannung am Heizelement nicht mehr verschwindet, und es wird entsprechend der jeweils andere Schalter geöffnet, in diesem Fall der Schalter 301. Dadurch fällt der Strom $I_1$ durch den Schalter 301 auf Null während der Strom durch den Schalter 302, der durchlegiert ist, auf $I_{Gesamt}$ ansteigt, wobei $I_{Gesamt}$ über der Auslöseschwelle 401 für die Sicherung 305 liegt. Demzufolge löst die Sicherung 305 aus und der Strom fällt auf Null.

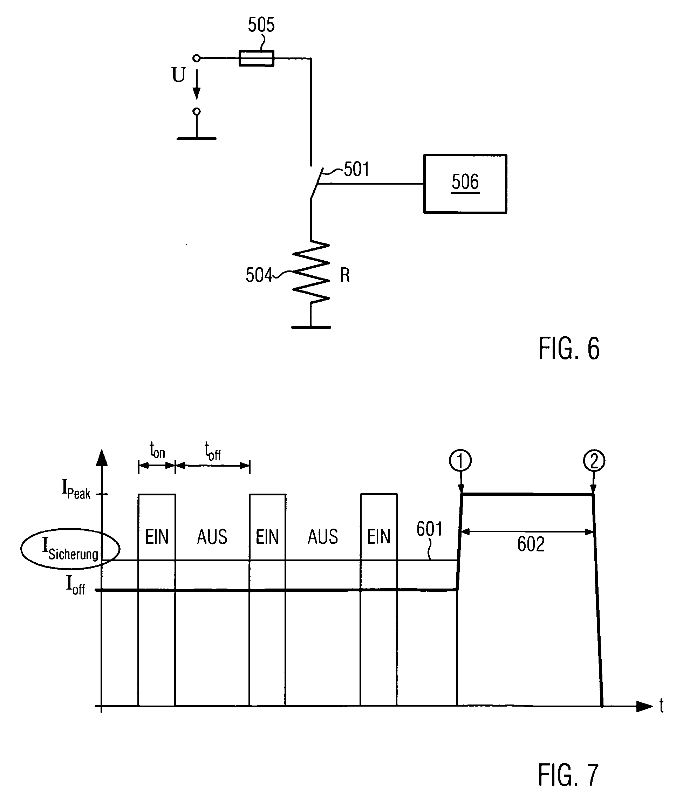

Eine schaltungstechnisch wesentlich vereinfachte Lösung, die mit nur einem Lastschalter 501 zum Schalten des Heizelements 504 auskommt, ist in Figur 6 gezeigt. Diese Schaltung benötigt allerdings eine Ansteuerschaltung zum Ansteuern des Schalters 501.

Erfindungsgemäß wird der Schalter 501 getaktet betrieben. Dadurch ergeben sich die folgenden Verhältnisse:

Der Effektivwert des fließenden Stromes I berechnet sich zu

$$I_{RMS} = I_{peak} \times \sqrt{PWM}$$

$$\text{mit } PWM = \frac{t_{on}}{t_{on} + t_{off}}$$

und es gilt

$$I_{peak} = \frac{U}{R}.$$

Das Tastverhältnis und die Sicherungseigenschaften der Sicherung 505 sind erfindungsgemäß so aufeinander abgestimmt, dass die folgenden Bedingungen erfüllt sind:

I. Der Effektivwert des Stroms ist kleiner als der Auslösestrom der Sicherung ( $I_{RMS} < I_{FUSE}$ ).
II. Die Einschaltzeit $t_{on}$ ist wesentlich kleiner als die Reaktionszeit (Schmelzzeit) der Sicherung ($t_{ON} << t_{FUSE}$) und
III. Der Spitzenstrom ist größer als der Auslösestrom der Sicherung ( $I_{PEAK} > I_{FUSE}$ ).

Die Funktionsweise der Schaltung aus Figur 6 ist aus dem Zeitdiagramm der Figur 7 im Detail ersichtlich.

Bei einem beispielhaften Tastverhältnis von 30% ist der eingestellte Effektivstrom geringer als die Auslöseschwelle 601 der Sicherung und beträgt dann im Beispiel ca. 55% des Maximalstromes $I_{PEAK}$ ($I_{RMS}$ (PVVM=30%) $\cong 0,55 \cdot I_{PEAK}$ ). Zum Zeitpunkt ① tritt der Bauteilfehler auf, so dass kein Ausschalten des Schalters 501 mehr möglich ist. Dadurch steigt der Effektivstrom auf den maximalen Wert $I_{peak}$ an. Der Maximalwert berechnet sich zu $I_{peak} = \frac{U}{R}$ und ist erfindungsgemäß höher als die Auslöseschwelle 601. Dadurch erwärmt sich die Sicherung nach ihrer Reaktionszeit 602, schmilzt durch und unterbricht den Stromfluss. Zum Zeitpunkt ② fällt daher der Strom auf Null.

Somit kann bei einem Durchlegieren des Lastschalters 501 auf besonders einfache und sichere Weise die Abschaltung erzwungen werden, bevor weitere Schäden durch Überhitzung auftreten können.

**Patentansprüche**

1. Schaltung für mindestens einen elektrischen Verbraucher mit einer Lastschaltvorrichtung, die mindestens einen Lastschalter (101, 102) aufweist, zum trennbaren elektrischen Verbinden des elektrischen Verbrauchers (104) mit einer Versorgungsspannung, wobei parallel zu der Lastschaltvorrichtung und dem zur Lastschaltvorrichtung in Serie geschaltetem Verbraucher mindestens ein Kurzschlusspfad mit mindestens einem Kurzschlussschalter (103) angeordnet ist und in Serie zu der Lastschaltvorrichtung mindestens ein Unterbrecherelement (105) zum Unterbrechen einer Verbindung der Lastschaltvorrichtung mit der Versorgungsspannung geschaltet ist und wobei die Schaltung weiterhin mindestens eine Induktivität (106, 107) zum Verlängern der Anstiegszeit des Stromes beim Aktivieren des Kurzschlusspfades aufweist.

2. Schaltung nach Anspruch 1, wobei mindestens eine Induktivität (106, 107) zum Verlängern der Anstiegszeit des Stromes beim Aktivieren des Kurzschlusspfades durch eine parasitäre Induktivität einer Zuleitung gebildet ist.

3. Schaltung für mindestens einen elektrischen Verbraucher mit einer Lastschaltvorrichtung zum trennbaren elektrischen Verbinden des mindestens einen elektrischen Verbrauchers mit einer Versorgungsspannung, wobei die Lastschaltvorrichtung eine Parallelschaltung von mindestens zwei Lastschaltern (301, 302), die jeweils mit einem Unterbrecherelement (303, 305) in Serie geschaltet sind, aufweist.

4. Schaltung für mindestens einen elektrischen Verbraucher mit einer Lastschaltvorrichtung zum trennbaren elektrischen Verbinden des mindestens einen elektrischen Verbrauchers mit einer Versorgungsspannung, wobei in Serie zu der Lastschaltvorrichtung (501) ein Unterbrecherelement (505) zum Unterbrechen einer Verbindung der Lastschaltvorrichtung mit der Versorgungsspannung geschaltet ist und wobei die Schaltung weiterhin eine Treiberschaltung (506) umfasst, die so betreibbar ist, dass ein Effektivwert eines durch den Verbraucher (504) fließenden Stromes kleiner ist als ein Auslösestrom des Unterbrecherelements, und wobei der Auslösestrom des Unterbrecherelements kleiner ist als ein durch den Verbraucher fließender Spitzenstrom.

5. Schaltung nach Anspruch 4, wobei eine Einschaltzeit des Schalters wesentlich kleiner gewählt ist als eine Reaktionszeit des Unterbrecherelements.

6. Schaltung nach Anspruch 1 bis 5, wobei das Unterbrecherelement (105; 303, 305) durch eine Schmelzsicherung gebildet ist.

7. Schaltung nach Anspruch 6, wobei die Schmelzsicherung als eine Schwachstelle in einer Leiterbahn ausgeführt ist.

8. Verfahren zum Ansteuern einer Lastschaltvorrichtung zum trennbaren elektrischen Verbinden mindestens eines elektrischen Verbrauchers mit einer Versorgungsspannung, wobei parallel zu der Lastschaltvorrichtung und dem zur Lastschaltvorrichtung in Serie geschaltetem Verbraucher mindestens ein Kurzschlusspfad mit mindestens einem Kurzschlussschalter angeordnet ist und in Serie zu der Lastschaltvorrichtung ein Unterbrecherelement zum Unterbrechen einer Verbindung der Lastschaltvorrichtung mit der Versorgungsspannung geschaltet ist und wobei die Versorgungsspannung über induktivitätsbehaftete Zuleitungen zugeführt wird, umfassend die folgenden Schritte:

(a) Überwachen der Lastschalter, ob ein Fehlerfall eingetreten ist;
(b) Ansteuern des Kurzschlussschalters zum Schließen des Kurzschlusspfades, wenn ein Fehler erkannt wurde;
(c) Ansteuern des Kurzschlussschalters zum Öffnen des Kurzschlusspfades, bevor ein Strom durch den Kurzschlussschalter einen kritischen Wert erreicht;
(d) Wiederholen der Schritte (b) und (c), bis die Verbindung der Lastschaltvorrichtung mit der Versorgungsspannung durch das Unterbrecherelement unterbrochen wird.

9. Verfahren nach Anspruch 8, wobei die Dauer des Schließens des Kurzschlusspfades durch eine Zeitsteuerung eingestellt wird.

10. Verfahren zum Ansteuern mindestens einer Lastschaltvorrichtung zum trennbaren elektrischen Verbinden mindestens eines elektrischen Verbrauchers mit einer Versorgungsspannung, wobei die Lastschaltvorrichtung eine Parallelschaltung von mindestens zwei Lastschaltern, die jeweils mit einem Unterbrecherelement in Serie geschaltet sind, aufweist, umfassend die folgenden Schritte:

(a) Überwachen der Lastschalter, ob ein Fehlerfall eingetreten ist;
(b) Öffnen oder Verhindern des Schließens der jeweils anderen Lastschalter, wenn in einem der Lastschalter ein Fehler erkannt wurde.

11. Verfahren zum Ansteuern einer Lastschaltvorrichtung zum trennbaren elektrischen Verbinden mindestens eines elektrischen Verbrauchers mit einer Versorgungsspannung, wobei in Serie zu der Lastschaltvorrichtung mindestens ein Unterbrecherelement zum Unterbrechen einer Verbindung der Lastschaltvorrichtung mit der Versorgungsspannung geschaltet ist, umfassend die folgenden Schritte:

getaktetes Einschalten der Lastschaltvorrichtung, wobei ein Tastverhältnis des Lastschalters so gewählt wird, dass ein Effektivwert eines durch den Verbraucher fließenden Stromes kleiner ist als ein Auslösestrom des Unterbrecherelements, und

wobei der Auslösestrom des Unterbrecherelements kleiner ist als ein durch den Verbraucher fließender Spitzenstrom.

12. Verfahren nach Anspruch 11, wobei ein Tastverhältnis Einschaltzeit/(Ausschaltzeit+Einschaltzeit) zumindest zeitweise 0 bis 60 % beträgt.

FIG. 1

FIG. 2

FIG. 3

305

303

$I_1$    $I_2$

301    302

$I_{ges}$

304

FIG. 4

$I_{ges}$

$I_{ges} = I_1 + I_2$    ④

①    ②  ③

$I_1$

$I_2$

201

t

FIG. 5

8

EP 2 173 016 A1

FIG. 6

FIG. 7

9

705

701 702 703

704

FIG. 8
(Stand der Technik)

Europäisches
Patentamt

European
Patent Office

Office européen
des brevets

# EUROPÄISCHER RECHERCHENBERICHT

Nummer der Anmeldung

EP 08 01 7411

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 630 923 A (CATEM GMBH & CO KG [DE]) 1. März 2006 (2006-03-01) | 3,6,7 | INV. H02H3/02 |
| Y | * Absatz [0039] - Absatz [0042]; Abbildung 5 * | 4,5,11 | |
| A | | 1,10 | |
| | ----- | | |
| Y | US 4 636 933 A (COWEN DAVID W [GB]) 13. Januar 1987 (1987-01-13) * Spalte 1, Zeile 37 - Zeile 42 * * Spalte 4, Zeile 47 - Zeile 52; Abbildung 1 * | 4,5,11 | |
| | ----- | | |

RECHERCHIERTE SACHGEBIETE (IPC)

H02H

Der vorliegende Recherchenbericht wurde für alle Patentansprüche erstellt

| Recherchenort | Abschlußdatum der Recherche | Prüfer |
|---|---|---|
| Den Haag | 13. Februar 2009 | Salm, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 7411

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2009

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 1630923 | A | | 01-03-2006 | ES | 2291787 | T3 | 01-03-2008 |
| US 4636933 | A | | 13-01-1987 | AU | 581579 | B2 | 23-02-1989 |
| | | | | AU | 4556785 | A | 06-02-1986 |
| | | | | BR | 8503573 | A | 29-04-1986 |
| | | | | CA | 1250651 | A1 | 28-02-1989 |
| | | | | DE | 3582207 | D1 | 25-04-1991 |
| | | | | DK | 343285 | A | 31-01-1986 |
| | | | | EP | 0173445 | A2 | 05-03-1986 |
| | | | | ES | 8608700 | A1 | 01-12-1986 |
| | | | | IN | 166751 | A1 | 14-07-1990 |
| | | | | JP | 61041668 | A | 28-02-1986 |
| | | | | ZA | 8505372 | A | 26-03-1986 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361641 A1